# EUROPÄISCHE PATENTSCHRIFT

(11) **EP 0 463 406 B1**
(45) Veröffentlichungstag und Bekanntmachung des Hinweises auf die Patenterteilung: **18.10.1995**
(21) Anmeldenummer: 91109075.1
(22) Anmeldetag: 04.06.1991
(51) Int. Cl.: C08F 10/06, C08F 2/38, C08F 2/34

(54) **Verfahren zur Herstellung von Homopolymerisaten des Propylens mit breitem Molmassenverhältnis**
Process for the production of propylene homopolymers with broad molecular weight distribution
Procédé de fabrication de homopolymères de propylène à large distribution de poids moléculaire

(30) Priorität: 15.06.1990 DE 4019053
(43) Veröffentlichungstag der Anmeldung: 02.01.1992
(73) Patentinhaber: BASF Aktiengesellschaft, 67063 Ludwigshafen (DE)
(72) Erfinder: Schwager, Harald, Dr., W-6720 Speyer (DE); Koelle, Peter, Dr., W-6700 Ludwigshafen (DE); Schlund, Rueger, Dr., W-6800 Mannheim 1 (DE); Zolk, Ralf, Dr., W-6714 Weisenheim (DE); Kerth, Juergen, Dr., W-6719 Carlsberg (DE); Schweier, Guenther, Dr., W-6701 Friedelsheim (DE); Hungenberg, Klaus-Dieter, Dr., W-6943 Birkenau (DE); Schoene, Werner, Dr., W-6905 Schriesheim (DE)

(56) Entgegenhaltungen:
- EP-A- 0 114 391
- EP-A- 0 192 427
- EP-A- 0 320 150
- EP-A- 0 359 444
- US-A- 4 454 299

## Beschreibung

Die vorliegende Erfindung betrifft ein Verfahren zur Herstellung von Homopolymerisaten des Propylens mit einem Molmassenverhältnis Q (M̅_{w}/M̅ₙ) von 6 bis 30, aus denen Folien und Formkörper hergestellt werden können.

Die Herstellung von Polymerisaten des Propylens durch Ziegler-Natta-Polymerisation ist bereits mehrfach beschrieben worden. Die dabei verwendeten Katalysatorkomponenten enthalten u.a. Verbindungen des mehrwertigen Titans, Aluminiumhalogenide und/oder Alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 48 57 613).

Des weiteren sind Verfahren zur Darstellung von Propylen-Ethylen-Blockcopolymeren mit Hilfe eines Ziegler-Natta-Katalysatorsystems bekannt (US-A 4 454 299, US-A 4 455 405, ZA-A 0084/3561, ZA-A 0084/3563, ZA-A 0084/5261), bei denen man zunächst gasförmiges Propylen in einer ersten Reaktionszone polymerisiert und das daraus erhältliche Homopolymerisat anschließend in eine zweite Reaktionszone bringt, wo ein Gemisch aus Ethylen und Propylen hinzupolymerisiert wird. Das Verfahren wird gewöhnlich bei erhöhtem Druck und in Anwesenheit von Wasserstoff als Molmassenregeler durchgeführt. Um bei diesen Verfahren zu Blockcopolymerisaten mit guten anwendungstechnischen Eigenschaften zu gelangen ist es u.a. notwendig, insbesondere im zweiten Reaktor relativ hohe Mengen an Wasserstoff zu verwenden, was einen verfahrenstechnischen Mehraufwand zur Folge hat. Aufgrund dieser speziellen Verfahrensweise zeichnen sich die dabei erhältlichen Copolymerisate insbesondere durch gute Eigenschaften bei der Verarbeitung aus.

Gegenüber derartigen Copolymerisaten weisen die mit Hilfe von Ziegler-Natta-Katalysatoren hergestellten Propylenhomopolymerisate u.a. eine höhere Steifigkeit auf. Diese Eigenschaft hat jedoch zur Folge, daß die Verarbeitung von Propylenpolymerisaten mit einem erheblichen verfahrenstechnischen Mehraufwand verbunden ist, da derartige Materialien in der Regel spröde sind. Für eine ganze Reihe von Anwendungen spielen jedoch gute Verarbeitungseigenschaften eine erheblich größere Rolle als beispielsweise eine verbesserte Steifigkeit, da bei diesen Einsatzbereichen eine mittlere mechanische Belastbarkeit der Propylenpolymerisate völlig ausreichend ist.

Aus der EP-A 114 391 ist ein einstufiges Verfahren zur Herstellung von Polymerisaten des Propylens durch gasphasenpolymerisation bekannt, die eine breite Molmassenverteilung aufweisen. Die dabei erhaltenen Polymerisate liefern Teilchen mit hoher Blockdichte und guter Fließfähigkeit, die leicht verarbeitet werden können.

Der vorliegenden Erfindung lag daher die Aufgabe zugrunde, den geschilderten Nachteilen abzuhelfen, und ein Verfahren zur Herstellung von Homopolymerisaten des Propylens mit verbesserten anwendungstechnischen Eigenschaften hinsichtlich der Verarbeitbarkeit zu entwickeln.

Gegenstand der Erfindung ist ein Verfahren zur Herstellung von Propylenhomopolymerisaten mit einem Molmassenverhältnis Q (M̅w̅/M̅n̅) von 6 bis 30, wobei man aus der Gasphase heraus in einem bewegten Festbett in Anwesenheit von Wasserstoff als Molmassenregler, mittels eines Ziegler-Natta-Katalysatorsystems, das neben einer titanhaltigen Feststoffkomponente, welche eine Verbindung des Magnesiums aufweist, noch eine Aluminiumverbindung enthält, zunächst in einer ersten Polymerisationsstufe bei einem Druck von 20 bis 40 bar, einer Temperatur von 60 bis 90°C und einer mittleren Verweilzeit des Reaktionsgemisches von 1 bis 5 Stunden Propylen polymerisiert und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 120°C und einer mittleren Verweilzeit des Reaktionsgemisches von 1 bis 5 Stunden, dem aus der ersten Polymerisationsstufe ausgebrachten Polymerisat weiteres Propylen hinzupolymerisiert, wobei man das Verhältnis der Partialdrücke zwischen Wasserstoff und Propylen in der ersten Polymerisationsstufe auf weniger als 2 : 100 und in der zweiten Polymiersationsstufe auf 1 : 100 bis 50 : 100 einstellt und das Gewichtsverhältnis zwischen den in der ersten und den in der zweiten Polymerisationsstufe umgesetzten Monomeren so bemißt, daß es im Bereich von 0,4 : 1 bis 20 : 1 liegt.

Das Molmassenverhältnis Q (M̅_{w}/M̅ₙ) liegt, vorzugsweise bei 8 bis 30 und insbesondere bei 10 bis 30. Das Molmassenverhältnis Q gibt dabei das Verhältnis zwischen dem Gewichtsmittel M̅_{w} und dem Zahlenmittel M̅ₙ der erfindungsgemäßen Polymerisate an.

Das zu diesen Polymerisaten führende verfahren kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von mehreren hintereinander geschalteten Rührkesseln einsetzt. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 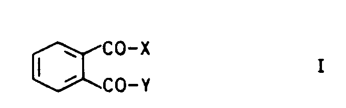
verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren.Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200 und der GB-A 2 111 066 beschrieben.

Bei der Herstellung der titanhaltigen Feststoffkomponente wird bevorzugt das nachstehende dreistufige verfahren angewandt.

In der ersten Stufe versetzt man zunächst einen feinteiligen Träger, bevorzugt Siliciumdioxid oder SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel I hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysatoren kommen dabei Aluminiumverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel II

R¹ₙSi(OR²)₄₋ₙ II

wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, R² eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Die Polymerisation wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 25 bis 35 bar, Temperaturen von 65 bis 85°C und mittlere Verweilzeiten von 1,5 bis 4 Stunden. Man wählt die Reaktionsbedingungen üblicherweise so, daß in der ersten Polymerisationszone pro mmol der Aluminiumkomponente 0,05 bis 2 kg, bevorzugt 0,1 bis 1,5 kg, eines Propylenpolymerisats gebildet werden.

Bei Mitverwendung von Wasserstoff wird in der ersten Polymerisationsstufe das Verhältnis zwischen dem Partialdruck des als Molmassenregler eingesetzten Wasserstoffs und dem des Propylens auf weniger als 2:100, vorzugsweise auf weniger als 1:100 und insbesondere auf weniger als 0,5:100 eingestellt. In einer besonders bevorzugten Ausführungsform wird in der ersten Polymerisationsstufe auf die Anwesenheit von Wasserstoff ganz verzichtet.

Das in der ersten Polymerisationsstufe gebildete Propylenpolymerisat wird nach Beendigung der Reaktion zusammen mit dem Katalysator aus der ersten Polymerisationsstufe ausgetragen und in die zweite Polymerisationsstufe eingeführt, wo diesem weiteres Propylen hinzupolymerisiert wird. Der in der zweiten Polymerisationsstufe vorherrschende Druck liegt mindestens 7, bevorzugt mindestens 10 bar, unter dem der ersten Polymerisationsstufe und beträgt 5 bis 30, vorzugsweise 10 bis 25 bar. Die Temperatur liegt bei 30 bis 120, bevorzugt bei 50 bis 110°C und die mittlere Verweilzeit des Polymerisats beträgt 1 bis 5 Stunden, bevorzugt 1,5 bis 4 Stunden.

Erfindungsgemäß wird in der zweiten Polymerisationsstufe das Verhältnis der Partialdrücke zwischen dem als Regler eingesetzten Wasserstoff und Propylen auf 1:100 bis 50:100, vorzugsweise auf 1:100 bis 10:100 und insbesondere auf 1:100 bis 6:100 eingestellt. Weiterhin ist es dabei erforderlich, das Gewichtsverhältnis zwischen den in der ersten und den in der zweiten Polymerisationsstufe umgesetzten Monomeren so zu bemessen, daß es im Bereich von 0,4:1 bis 20:1, insbesondere im Bereich von 0,5:1 bis 15:1 liegt. Bei bestimmten Verfahren haben sich Verhältnisse von 0,4:1 bis 6:1 und insbesondere 0,5:1 bis 5:1 bewährt.

Nach einer weiteren Ausführungsform des zu den Propylenpolymerisaten führenden Verfahrens wird dem Reaktionsgemisch der zweiten Polymerisationsstufe ein C₁-C₈-Alkanol, insbesondere ein C₁-C₄-Alkanol, hinzugefügt, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des C₁-C₈-Alkanols wird dabei zweckmäßigerweise so bemessen, daß das Molverhältnis zwischen der Aluminiumkomponente des Ziegler-Natta-Katalysators und dem in der zweiten Polymerisationsstufe hinzugefügten C₁-C₈-Alkanol auf 0,1:1 bis 10:1, insbesondere auf 0,2:1 bis 5:1, eingestellt wird.

Mit Hilfe dieser Verfahrensschritte lassen sich vor allem Propylenhomopolymerisate herstellen. Diese Polymerisate können noch in geringem Umfang weitere C₂-C₁₀-Alk-1-ene, beispielsweise Ethylen, But-1-en, Pent-1-en oder Hex-1-en enthalten, wobei in diesem Fall das Verhältnis der Partialdrücke zwischen den weiteren C₂-C₁₀-Alk-1-enen und dem Propylen nicht mehr als 1:100, vorzugsweise nicht mehr als 0,5:100 beträgt. Die Zufuhr dieser geringen Mengen an C₂-C₁₀-Alk-1-enen kann sowohl im ersten als auch in der zweiten Polymerisationsstufe erfolgen.

Die mittleren Molmassen (M̅_{w}) der erfindungsgemäßen Polymerisate liegen vorzugsweise zwischen 10 000 und 500 000, die Schmelzflußindices im Bereich von 0,1 bis 100 g/10 min, vorzugsweise zwischen 0,2 bis 50 g/10 min, jeweils gemessen nach DIN 53 735 bei 230°C und 2,16 kg bzw. 21,6 kg. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg bzw. von 21,6 kg ausgepreßt wird.

Aufgrund der bei gleichem Schmelzflußindex breiteren Molmassenverteilung weisen die erfindungsgemäßen Propylenpolymerisate im Vergleich zu den bisher bekannten Propylenpolymerisaten eine bessere Fließfähigkeit und verbesserte anwendungstechnische Eigenschaften auf. Dies hat zur Folge, daß die Verarbeitung derartiger Polymerisate beispielsweise in Extrudern, im Spritzgußverfahren oder beim "Thermoforming" erheblich erleichtert wird.

Aufgrund dieser verbesserten anwendungstechnischen Eigenschaften eignen sich die erfindungsgemäßen Polymerisate u.a. zur Herstellung von Folien, Rohren, Belägen, Fasern, Hohlkörpern, Spritzgußartikeln und von Formteilen für den Fahrzeugbau.

### Beispiele

### Beispiele 1 bis 6

Das Verfahren wurde in allen Beispielen 1-6 in zwei hintereinander geschalteten Rührautoklaven mit einem Nutzvolumen von jeweils 180 l durchgeführt. Beide Reaktoren enthielten ein bewegtes Festbett aus feinteiligem Polypropylen.

In den ersten Polymerisationsreaktor wurde Propylen gasförmig eingeleitet und bei einer mittleren Verweilzeit von 3 Stunden mit Hilfe eines Ziegler-Natta-Katalysators polymerisiert. Die genauen Versuchsbedingungen, das Verhältnis der Partialdrücke zwischen den als Regler eingesetzten Wasserstoff und Propylen, das Gewichtsverhältnis zwischen den in der ersten und den in der zweiten Polymerisationsstufe umgesetzten Monomeren und die Schmelzflußindices der erhaltenen Polymerisate sind für alle Beispiele in der Tabelle 1 wiedergegeben.

In allen Beispielen erfolgte die Polymerisation kontinuierlich mit Hilfe eines Ziegler-Natta-Katalysators, wobei pro Stunde 1 g einer titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationszone 0,4 kg Propylen-Copolymerisat erzeugt.

Das im ersten Reaktor gebildete Propylenpolymerisat wurde anschließend zusammen mit dem Katalysator in den zweiten Rührautoklaven übergeführt und dort bei einer Verweilzeit von 3 Stunden dem Polymerisat weiteres Propylen hinzupolymerisiert. Die genauen Versuchsbedingungen, das Verhältnis der Partialdrücke zwischen Wasserstoff und Propylen, die Schmelzflußindices und die Molmassenverteilung Q der erhaltenen Polymerisate sind für alle Beispiele in der Tabelle 2 wiedergegeben.

Die titanhaltige Feststoffkomponente wurde nach folgendem Verfahren hergestellt.

Dazu versetzte man in einer ersten Stufe SiO₂, welches einen Teilchendurchmesser von 20 bis 45 µm, ein Porenvolumen von 1,75 cm³/g und eine Oberfläche von 320 m²/g aufwies, mit in n-Heptan gelöstem Butyl-octylmagnesium, wobei pro Mol SiO₂ · 0,3 mol der Magnesiumverbindung eingesetzt wurden. Die Lösung wurde 1,5 Stunden lang bei 90°C gerührt, danach auf 20°C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurde unter ständigem Rühren 3 mol Ethanol, bezogen auf 1 mol Magnesium, hinzugefügt. Dieses Gemisch wurde 1,5 Stunden bei 80°C gerührt und danach mit 6 mol Titantetrachlorid und 0,5 mol Phthalsäuredi-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125°C mit einer 15 gewichtsprozentigen Lösung von Titantetrachlorid in Ethylbenzol. Danach wurde das Festprodukt durch Filtration vom Extraktionsmittel getrennt und solange mit n-Heptan gewaschen, bis dieses nur mehr 0,3 Gew.-% Titantetrachlorid enthielt.

Die daraus resultierende titanhaltige Feststoffkomponente enthielt 3,1 Gew.-% Titan, 7,5 Gew.-% Magnesium und 28,3 Gew.-% Chlor.

**Tabelle 1**

| Reaktionsbedingungen in der ersten Polymerisationsstufe | | | | | |
|---|---|---|---|---|---|
| | Temperatur [°C] | Druck [bar] | Verhältnis Wasserstoff: Propylen | Schmelzflußindex [g/10 min] | Gewichtsverhältnis zwischen den in der ersten und den in der zweiten Polymerisationsstufe umgesetzten Monomeren |
| Bsp. | | | | | |
| 1 | 70 | 28 | 0:100 | 8,1^{a)} | 1:1 |
| 2 | 70 | 28 | 0,1:100 | 0,9^{b)} | 1:1 |
| 3 | 80 | 32 | 0:100 | 7,8^{a)} | 1,5:1 |
| 4 | 70 | 28 | 0:100 | 8,0^{a)} | 1:1,5 |
| 5 | 70 | 28 | 0:100 | 10,5^{a)} | 5:1 |
| 6 | 80 | 32 | 0:100 | 11,4^{a)} | 1:1 |

| | | | | | |
|---|---|---|---|---|---|
| ^{a)} Schmelzflußindex nach DIN 53735, bei 230°C und 21,6 kg | | | | | |
| ^{b)} Schmelzflußindex nach DIN 53735, bei 230°C und 2,16 kg | | | | | |

**Tabelle 2**

| Reaktionsbedingungen in der zweiten Polymerisationsstufe | | | | | |
|---|---|---|---|---|---|
| | Temperatur [°C] | Druck [bar] | Verhältnis Wasserstoff: Propylen | Schmelzflußindex [g/10 min] | Molmassenverhältnis Q [M̅w/M̅n] |
| Bsp. | | | | | |
| 1 | 90 | 21 | 2:100 | 1,8^{b)} | 12 |
| 2 | 90 | 21 | 1,6:100 | 3,4^{b)} | 14 |
| 3 | 100 | 21 | 3:100 | 3,6^{b)} | 12 |
| 4 | 100 | 21 | 2,5:100 | 3,5^{b)} | 13 |
| 5 | 100 | 21 | 6:100 | 27 ^{a)} | 9 |
| 6 | 90 | 21 | 1:100 | 1,3^{b)} | 6 |

| | | | | | |
|---|---|---|---|---|---|
| ^{a)} Schmelzflußindex nach DIN 53735, bei 230°C und 21,6 kg | | | | | |
| ^{b)} Schmelzflußindex nach DIN 53735, bei 230°C und 2,16 kg | | | | | |

### Beispiele 7 bis 9

Das Verfahren wurde in den Beispielen 7-9 in zwei hintereinander geschalteten Rührautoklaven mit einem Nutzvolumen von jeweils 180 l durchgeführt. Beide Reaktoren enthielten ein bewegtes Festbett aus feinteiligem Polypropylen.

In den ersten Polymerisationsreaktor wurde Propylen gasförmig eingeleitet und bei einer mittleren Verweilzeit von 2,5 Stunden mit Hilfe eines Ziegler-Natta-Katalysators ohne Wasserstoff als Regler polymerisiert. Die genauen Versuchsbedingungen, die Molmassen der dabei erhaltenen Polypropylene und das Gewichtsverhältnis zwischen den in der ersten und den in der zweiten Polymerisationsstufe umgesetzten Monomeren sind für alle Beispiele in der Tabelle 3 wiedergegeben.

In allen Beispielen erfolgte die Polymerisation kontinuierlich mit Hilfe eines Ziegler-Natta-Katalysators, wobei pro Stunde 1 g der gleichen, bereits in den Beispielen 1-6 verwendeten titanhaltigen Feststoffkomponente, 60 mmol Triethylaluminium und 6 mmol Dimethoxyisobutylisopropylsilan als Katalysatorbestandteile verwendet wurden. Dabei wurden pro mmol der Aluminiumverbindung in der ersten Polymerisationsstufe 0,4 kg Propylen-Copolymerisat erzeugt.

Das im ersten Reaktor gebildete Propylenpolymerisat wurde anschließend zusammen mit dem Katalysator in den zweiten Rührautoklaven übergeführt. Dort wurde dem im ersten Rührautoklaven hergestellten Polymerisat bei einer Verweilzeit von 2,5 Stunden und in Anwesenheit von Isopropanol weiteres Propylen hinzupolymerisiert. Die genauen Versuchsbedingungen, die Mengen des hinzugefügten Isopropanols, das Verhältnis der Partialdrücke zwischen Wasserstoff und Propylen, die Schmelzflußindices, die Molmassen und die Molmassenverteilung Q der erhaltenen Polymerisate sind für alle Beispiele in der Tabelle 4 wiedergegeben.

**Tabelle 3**

| Reaktionsbedingungen in der ersten Polymerisationsstufe | | | | |
|---|---|---|---|---|
| | Temperatur [°C] | Druck [bar] | Molmasse (M̅_{w}) des erhaltenen Polypropylens | Gewichtsverhältnis zwischen den in der ersten und den in der zweiten Polymerisationsstufe umgesetzten Monomeren |
| Bsp. | | | | |
| 7 | 70 | 28 | 1 500 000 | 1,1:1 |
| 8 | 70 | 28 | 1 500 000 | 2,1:1 |
| 9 | 70 | 28 | 1 500 000 | 6,3:1 |

**Tabelle 4**

| Reaktionsbedingungen in der zweiten Polymerisationsstufe | | | |
|---|---|---|---|
| | Beispiele | | |
| | 7 | 8 | 9 |
| Temperatur [°C] | 100 | 100 | 100 |
| Druck [bar] | 21 | 21 | 21 |
| Menge Isopropanol^{a} [mmol/h] | 50 | 75 | 83 |
| Verhältnis Menge Aluminiumkomponente zur Menge Isopropanol | 1,20 | 0,8 | 0,72 |
| Verhältnis Wasserstoff:Propylen | 5:100 | 5,7:100 | 6:100 |
| Schmelzflußindex^{b} [g/10 min] | 0,4 | 0,1 | 0,08 |
| Schmelzflußindex^{c} [g/10 min] | 72 | 31 | 23 |
| Molmasse [M̅_{w}] | 811 000 | 1 000 000 | 1 100 000 |
| Molmassenverhältnis Q [M̅_{w}/M̅ₙ] | 14 | 13 | 10 |

| | | | |
|---|---|---|---|
| a) Menge des pro Stunde in der zweiten Polymerisationsstufe hinzugefügten Isopropanols | | | |
| b) Schmelzflußindex nach DIN 53 735, bei 230°C und 2,16 kg | | | |
| c) Schmelzflußindex nach DIN 53 735, bei 230°C und 21,6 kg | | | |

Aufgrund des hohen Molmassenverhältnisses Q und der damit verbundenen breiten Molmassenverteilung sind die erfindungsgemäßen Propylenpolymerisate leicht verarbeitbar.

## Patentansprüche

1. Verfahren zur Herstellung von Propylenhomopolymerisaten mit einem Molmassenverhältnis Q (M̅w̅/M̅n̅) von 6 bis 30, wobei man aus der Gasphase heraus in einem bewegten Festbett in Anwesenheit von Wasserstoff als Molmassenregler, mittels eines Ziegler-Natta-Katalysatorsystems, das neben einer titanhaltigen Feststoffkomponente, welche eine Verbindung des Magnesiums aufweist, noch eine Aluminiumverbindung enthält, zunächst in einer ersten Polymerisationsstufe bei einem Druck von 20 bis 40 bar, einer Temperatur von 60 bis 90°C und einer mittleren Verweilzeit des Reaktionsgemisches von 1 bis 5 Stunden Propylen polymerisiert und in einer zweiten Polymerisationsstufe bei einem Druck von 5 bis 30 bar, wobei dieser Druck wenigstens 7 bar unter dem Druck der ersten Polymerisationsstufe liegt, einer Temperatur von 30 bis 120°C und einer mittleren Verweilzeit des Reaktionsgemisches von 1 bis 5 Stunden, dem aus der ersten Polymerisationsstufe ausgebrachten Polymerisat weiteres Propylen hinzupolymerisiert, dadurch gekennzeichnet, daß man das Verhältnis der Partialdrücke zwischen Wasserstoff und Propylen in der ersten Polymerisationsstufe auf weniger als 2 : 100 und in der zweiten Polymiersationsstufe auf 1 : 100 bis 50 : 100 einstellt und das Gewichtsverhältnis zwischen den in der ersten und den in der zweiten Polymerisationsstufe umgesetzten Monomeren so bemißt, daß es im Bereich von 0,4 : 1 bis 20 : 1 liegt.

2. Verfahren nach Anspruch 1, dadurch gekennzeichnet, daß man bei dem angegebenen Verfahren in der ersten Polymerisationsstufe das Verhältnis der Partialdrücke zwischen Wasserstoff und Propylen auf 1 : 100 einstellt.

3. Verfahren nach Anspruch 2, dadurch gekennzeichnet, daß man bei dem angegebenen Verfahren in der zweiten Polymerisationsstufe das Verhältnis der Partialdrücke zwischen Wasserstoff und Propylen auf 1 : 100 bis 10 : 100 einstellt.

4. Verfahren nach den Ansprüchen 1 bis 3, dadurch gekennzeichnet, daß man das Gewichtsverhältnis zwischen den in der ersten und den in der zweiten Polymerisationsstufe umgesetzten Monomeren so bemißt, daß es im Bereich von 0,5 : 1 bis 15 : 1 liegt.

5. Verfahren nach den Ansprüchen 1 bis 4, dadurch gekennzeichnet, daß man die Polymerisation in der zweiten Polymerisationsstufe in Gegenwart eines C₁-C₈-Alkanols durchführt.

6. Verfahren nach den Ansprüchen 1 bis 5, dadurch gekennzeichnet, daß man das Molverhältnis zwischen der Aluminiumkomponente des Ziegler-Natta-Katalysatorsystems und dem in der zweiten Polymerisationsstufe hinzugefügten C₁-C₈-Alkanols auf 0,1 : 1 bis 10 : 1 einstellt.

7. Verfahren nach den Ansprüchen 1 bis 6, dadurch gekennzeichnet, daß man die Polymerisation in der zweiten Polymerisationsstufe in Gegenwart eines C₁-C₄-Alkanols durchführt.

## Claims

1. A process for the preparation of a propylene homopolymer having a molecular weight ratio Q (M̅w̅/M̅n̅) of from 6 to 30, in which, from the gas phase in an agitated fixed bed in the presence of hydrogen as molecular weight regulator, by means of a Ziegler-Natta catalyst system containing an aluminum compound in addition to a titanium-containing solid component which also contains a compound of magnesium, propylene is first polymerized in a first polymerization step at from 20 to 40 bar and from 60 to 90°C and at a mean residence time of the reaction mixture of from 1 to 5 hours, in a second polymerization step, further propylene is addition-polymerized onto the polymer from the first polymerization step at from 5 to 30 bar, this pressure being at least 7 bar below the pressure in the first polymerization step, and from 30 to 120°C and at a mean residence time of the reaction mixture of from 1 to 5 hours, which comprises setting the ratio between the partial pressures of hydrogen and propylene in the first polymerization stop at less than 2:100 and in the second polymerization step at from 1:100 to 50:100, and the weight ratio between the monomers reacted in the first and second polymerization steps being in the range from 0.4:1 to 20:1.

2. A process as claimed in claim 1, which comprises, in the first polymerization step of the stated process, setting the ratio between the partial pressures of hydrogen and propylene to 1:100.

3. A process as claimed in claim 2, which comprises, in the second polymerization step of the stated process, setting the ratio between the partial pressures of hydrogen and propylene to from 1:100 to 10:100.

4. A process as claimed in claim 1 or 2 or 3, which comprises setting the weight ratio between the monomers reacted in the first and second polymerization steps at from 0.5:1 to 15:1.

5. A process as claimed in claim 1 or 2 or 3 or 4, which comprises carrying out the polymerization in the second polymerization step in the presence of a C₁-C₈-alkanol.

6. A process as claimed in claim 1 or 2 or 3 or 4 or 5, which comprises setting the molar ratio between the aluminum component of the Ziegler-Natta catalyst system and the C₁-C₈-alkanol added in the second polymerization step to from 0.1:1 to 10:1.

7. A process as claimed in claim 1 or 2 or 3 or 4 or 5 or 6, which comprises carrying out the polymerization in the second polymerization step in the presence of a C₁-C₄-alkanol.

## Revendications

1. Procédé de préparation d'homopolymères de propylène ayant un rapport de masses moléculaires Q (M̅w/M̅n) de 6 à 30, dans lequel on procède en phase gazeuse dans un lit fixe agité, en présence d'hydrogène servant de régulateur de la masse moléculaire, au moyen d'un système catalytique de Ziegler-Natta contenant un composé de l'aluminium en plus d'un composant solide qui contient du titane et renferme un composé du magnésium, et, dans une première étape de polymérisation, on commence par polymériser du propylène sous une pression de 20 à 40 bar, à une température de 60 à 90°C et avec une durée moyenne de séjour du mélange réactionnel de 1 à 5 h, puis, dans une seconde étape de polymérisation, on polymérise une quantité supplémentaire de propylène sur le polymère provenant de la première étape de polymérisation, sous une pression de 5 à 30 bar, cette pression étant inférieure d'au moins 7 bar à la pression de la première étape de polymérisation, à une température de 30 à 120°C et avec une durée moyenne de séjour du mélange réactionnel de 1 à 5 h, caractérisé en ce que l'on règle le rapport des pressions partielles entre l'hydrogène et le propylène a moins de 2:100 dans la première étape de polymérisation, et à une valeur comprise entre 1:100 et 50:100 dans la seconde étape de polymérisation, et en ce que l'on choisit le rapport pondéral entre les monomères mis en réaction dans la première étape et dans la seconde étape de polymérisation de telle sorte qu'il se situe dans le gamme de 0,4:1 à 20:1.

2. Procédé selon la revendication 1, caractérisé en ce que, dans le procédé indiqué, on règle à 1:100, dans la première étape de polymérisation, le rapport des pressions partielles entre l'hydrogène et le propylène.

3. Procédé selon la revendication 2, caractérisé en ce que, dans le procédé indiqué, on règle à une valeur comprise entre 1:100 et 10:100, dans la seconde étape de polymérisation, le rapport des pressions partielles entre l'hydrogène et le propylène.

4. Procédé selon l'une quelconque des revendications 1 à 3, caractérisé en ce que l'on choisit le rapport pondéral entre les monomères mis en réaction dans la première étape et dans la seconde étape de polymérisation de telle sorte qu'il se situe dans la gamme de 0,5:1 à 15:1.

5. Procédé selon l'une quelconque des revendications 1 à 4, caractérisé en ce que, dans la seconde étape de polymérisation, on effectue la polymérisation en présence d'un alcanol en C₁-C₈.

6. Procédé selon l'une quelconque des revendications 1 à 5, caractérisé en ce que l'on règle entre 0,1:1 et 10:1 le rapport molaire entre le composant à l'aluminium du système catalytique de Ziegler-Natta et l'alcanol en C₁-C₈ ajouté dans la seconde étape de polymérisation.

7. Procédé selon l'une quelconque des revendications 1 à 6, caractérisé en ce que, dans la seconde étape de polymérisation, on effectue la polymérisation en présence d'un alcanol en C₁-C₄.
